# EUROPEAN PATENT APPLICATION

(11) **EP 2 865 502 A1**
(43) Date of publication of application: **29.04.2015**
(21) Application number: 13190300.7
(22) Date of filing: 25.10.2013
(51) Int. Cl.: B28D 5/00

(54) **Semiconductor wire saw including a nozzle for generating a fluid jet**

(71) Applicant: Applied Materials Switzerland Sàrl, 1033 Cheseaux-sur-Lausanne (CH)
(72) Inventor: Cretegny, Danilo, 1020 Renens (CH); Soubielle, Sebastien, 1032 Romanel-sur-Lausanne (CH)
(74) Representative: Zimmermann & Partner Patentanwälte mbB

(57) **Abstract**

A semiconductor wire saw (1) comprising a support (150) for holding a semiconductor workpiece; a wire guide (160) for forming a wire web (170) for sawing the workpiece; a nozzle (100) for generating a fluid jet directable at the wire web (170). The nozzle (100) includes an outlet (112) which has a width (202) and a depth (203). The ratio of the depth (203) to the width (202) is greater than 3.5 and/or the outlet (112) includes a plurality of surface portions (310) to provide shear stress in a cutting fluid. The optional surface portions (310) are disposed in an inner region of the areal cross-section (250) of the outlet (112).

## Description

### FIELD OF THE PRESENT DISCLOSURE

The present disclosure relates to a wire saw, particularly a wire saw for photovoltaic and/or semiconductor applications. The present disclosure particularly relates to a wire saw where the wire is lubricated and/or cooled by a cutting fluid which can be delivered to a wire web through a nozzle which forms a fluid jet.

### BACKGROUND OF THE PRESENT DISCLOSURE

Wire saws are used in the photovoltaic and/or semiconductor industry. For example, wire saws cut semiconductor workpieces into shapes amenable for further processing, for example cutting silicon ingots into wafers, bricks, or squares. The wire, or cutting wire, of the wire saw can be used for cutting a workpiece. A cutting fluid can be used for lubrication, cooling, and/or providing abrasive particles during cutting. As used herein, the term "semiconductor wire saw" refers to a wire saw specifically adapted to cut semiconductor material, such as semiconductor ingots.

A nozzle of a wire saw can be used to generate a fluid jet of cutting fluid. The fluid jet may be directed at a wire web formed by the wire saw which is used for sawing workpieces. Nozzles can be located just above the wire web in the cutting room of the wire saw. Nozzles can transform the flow direction, e.g. axial flow, of the cutting fluid into vertical flow at the exit of the nozzle, forming the fluid jet.

It is desirable that the fluid jet be uniform, particularly across the entire length of the fluid jet in order to have full lubricating, cooling, and/or uniform abrasive effect of the cutting fluid on the wire. Furthermore, it is desirable that the fluid jet be uniform over long operational periods.

It is likewise desirable that the risk of clogging of the nozzle is reduced. Small particles may clog the nozzle, such as particles of the workpiece which are generated during cutting, and abrasive particles in the cutting fluid.

### SUMMARY

In view of the above, the following is provided.

A semiconductor wire saw is disclosed, the wire saw including a support for holding a semiconductor workpiece; a wire guide for forming a wire web for sawing the workpiece and a nozzle for generating a fluid jet directable at the wire web. The nozzle includes an outlet, the outlet has a width and a depth, wherein the width and a length of the outlet coincide with an areal cross-section of the outlet, wherein (a) the ratio of the depth to the width is greater than 3.5 and/or (b) the outlet includes a plurality of surface portions for providing a shear stress in a cutting fluid, wherein the surface portions are disposed in an inner region of the areal cross-section of the outlet.

Further advantages, features, aspects and details are apparent from the dependent claims, the description and the drawings.

The disclosure is also directed to an apparatus for carrying out the disclosed methods and including apparatus parts for performing each described method steps. These method steps may be performed by way of hardware components, a computer programmed by appropriate software, by any combination of the two or in any other manner. Furthermore, the disclosure is also directed to methods by which the described apparatus operates. It includes method steps for carrying out every function of the apparatus.

Furthermore, embodiments according to the invention are also directed at methods by which the described apparatus operates.

### BRIEF DESCRIPTION OF THE DRAWINGS

So that the manner in which the above recited features of the present disclosure can be understood in detail, a more particular description, briefly summarized above, may be had by reference to embodiments. The accompanying drawings relate to embodiments.

Fig. 1 shows a wire saw including a nozzle according to embodiments described herein;

Fig. 2 shows a nozzle of a wire saw, according to embodiments described herein;

Fig. 3 shows a nozzle of a wire saw, according to embodiments described herein;

Fig. 4 shows a nozzle of a wire saw, according to embodiments described herein;

Fig. 5 shows a nozzle of a wire saw, according to embodiments described herein;

Fig. 6 shows a view of surface portions of an outlet of a nozzle, according to embodiments described herein;

Fig. 7 shows views of surface portions of an outlet of a nozzle, according to embodiments described herein;

Fig. 8 shows a view of surface portions of an outlet of a nozzle, according to embodiments described herein;

Fig. 9 shows views of surface portions of an outlet of a nozzle, according to embodiments described herein;

Fig. 10 shows a view of an outlet of a nozzle, according to embodiments described herein;

Fig. 11 shows a view of an outlet of a nozzle, according to embodiments described herein; and

Fig. 12 shows a view of a nozzle, according to embodiments described herein.

### DETAILED DESCRIPTION

Herein, a cutting fluid can for example be a slurry such as a slurry which includes abrasive particles. Herein, "cutting fluid curtain" and "fluid curtain" are used interchangeably.

Herein, "chicane" typically refers to a structure located within the main chamber of a nozzle which can be used for inducing a pressure drop of a cutting fluid flowing through the nozzle. A chicane may impede the flow of the cutting fluid, particularly by causing a change in the direction of motion of the fluid. For example, a chicane can take the form of a two chamber nozzle (such as nested chambers) which has openings such as holes or slits in the inner chamber leading to the outer chamber; the outer chamber can lead to an outlet of the nozzle. Nested chambers may decelerate the fluid and provide a uniform pressure at a nozzle outlet, such as a slit. The inclusion of two chambers in a nozzle may result in the nozzle occupying significant space. It is desirable to have a smaller nozzle.

Herein, "coincide" is typically intended to mean corresponding in nature, for example "related," and/or "closely related to," and not necessarily exactly corresponding and/or related to. For example, an areal cross section of a fluid jet may coincide with an opening of an outlet of a nozzle, although the opening of the nozzle may be somewhat larger than the cross-sectional area of the fluid jet due for example to surface tension driven contraction of the fluid jet, particularly at increasing distances of the cross-section of the fluid jet from the opening of the outlet. In other words, "coincide" is not necessarily limited to meaning exactly corresponding in shape, surface area, and/or position.

Herein "wet surface" is typically intended to mean a surface of a structure which makes contact with a cutting fluid. Thereby, the fluid is not necessarily a liquid. The term "wet surface" may also be used in reference to a gas as a fluid. In some embodiments described herein, the cutting fluid is a liquid, however.

For explanation, a "wet surface" within a nozzle typically makes contact with a flowing cutting fluid and induces shear stress. This may reduce the pressure and/or velocity of the fluid.

Herein "surface portions" is typically intended to mean portions of a surface or surfaces. For example, herein, surface portions may be wet surfaces which induce shear stress in a fluid.

Herein "directable at" is typically intended to mean able to be directed at. "Directable at" and "directable toward" are used interchangeably. For example, herein, the nozzle of a wire saw can be directable at the wire web. Herein a nozzle which is directed toward or directed at a wire web may also be directable toward the wire web.

Herein, the terms "ratio of depth to width," "ratio depth/width," "depth/ width," "depth to width" and the like are used interchangeably. Herein, "areal" is typically intended to mean of, relating to, and/or involving an area.

Herein, "flow direction" can be used to indicate a virtual flow direction of a fluid, such as a usual direction of flow of a fluid, of a component for example a nozzle outlet. A component may have a "flow direction" whether or not it actually has fluid flowing in it, because for example, a flow direction can be predicted based for example on the geometry of the component. For example a "flow direction of an outlet" is intended to mean that direction which coincides with the direction of a motion of a fluid when the fluid is flowing through the nozzle outlet. For example, the flow direction of the outlet can correspond to an average flow direction of the cutting fluid in the outlet when the fluid is flowing through the outlet, such as an average of an areal cross-section of the outlet or a volumetric average. For example the flow direction of a nozzle outlet can correspond to the areal average of the flow direction taken in the middle of the nozzle outlet, or the exit of the nozzle.

Reference will now be made in detail to the various embodiments, one or more examples of which are illustrated in the figures. Each example is provided by way of explanation and is not meant as a limitation. Further, features illustrated or described as part of one embodiment can be used on or in conjunction with other embodiments to yield yet a further embodiment. It is intended that the description includes such modifications and variations.

In a wire saw, a wire (or wires) can be guided by at least one wire guide which rotates and causes/allows the movement of the wire, the movement being substantially along the length of the wire. Wire guides, which rotate about the cylinder axis, are sometimes referred to as rollers, cylinders, and wire guide cylinders.

A wire web, formed by the wire guide, can be lubricated, cooled, and/or fed with abrasive fluid by a cutting fluid. A nozzle can generate a fluid jet directable at the wire web. A fluid jet can be for example a sheet like formation of the cutting fluid exiting the nozzle such as a cutting fluid curtain. A gap and/or discontinuity in the distribution of the fluid jet may cause a portion of the wire web to be poorly lubricated and/or poorly cooled. It is desirable that the nozzle generates a uniform fluid jet, particularly a continuous fluid jet without gaps. The distribution uniformity of a fluid jet on a wire web of wire saws can have a significant impact on wafer quality.

In an embodiment disclosed herein, a single long chamber nozzle has an outlet that directly delivers the cutting fluid (e.g. slurry) to the wire web. The nozzle, particularly the outlet thereof, can have a large "wet surface". The pressure losses can be generated by shear stress at the wall(s) of the outlet 112 and/or "surface portions" of the outlet. For example, pressure losses can be increased without having a large fluid velocity. Increased pressure losses at the nozzle outlet can advantageously reduce the design constraints of the fluid circuit upward, e.g. toward the inlet of the nozzle, and in particular the inlet cross section of the nozzle. For example, the inlet cross-section of the nozzle can be smaller without affecting the flow distribution along the outlet 112. Alternatively or additionally, varying flow rates can have less impact on the pressure loss distribution in the fluid circuit, as the major pressure losses can remain at the nozzle outlet. This can provide a larger functional range of the nozzle in view of flow rate variations. Further advantages can be an extended flow range in partial load conditions.

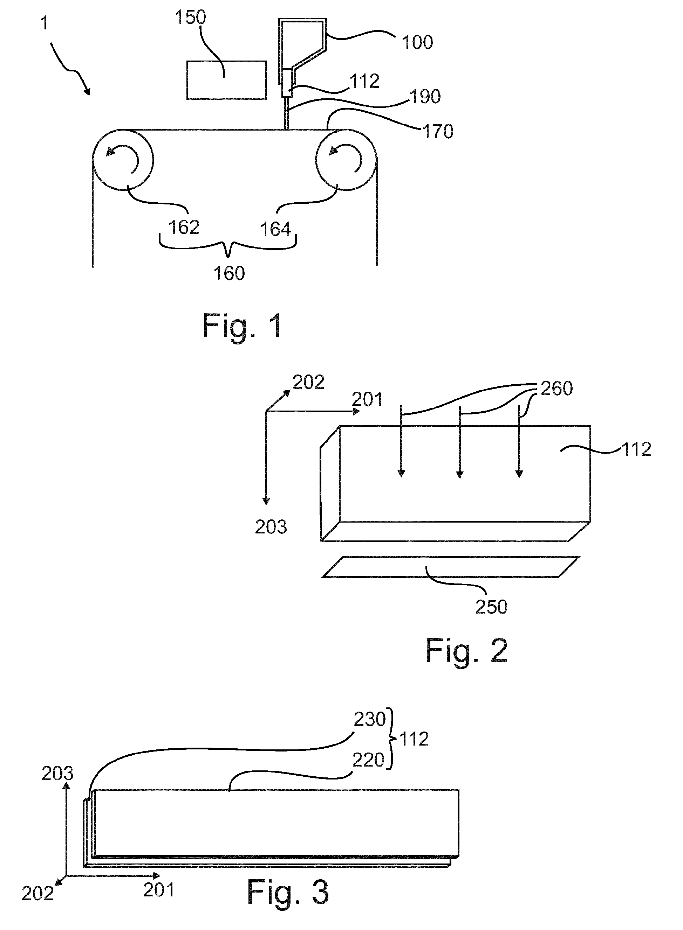

Fig. 1 illustrates a wire saw 1, according to an embodiment described herein. For example, a wire saw 1 includes a support 150 for holding a semiconductor workpiece, and a wire guide 160 such as wire guide components 162, 164 which are grooved cylinders. A wire guide 160 can form a wire web for sawing the workpiece. For example the grooves of the cylinders 162, 164 guide a wire so that a planer web 170 of parallel wire segments are formed perpendicular to the plane of Fig. 1.

A wire saw 1 also can include a nozzle 100 which includes a nozzle outlet 112. A cutting fluid can exit the outlet of the nozzle and form a fluid jet 190 such as a cutting fluid curtain which may be directed at/toward the wire web. The fluid jet 190 can lubricate and/or cool the wire which can be subjected to harsh conditions as it slides along a workpiece and makes a cut. In an embodiment which can be combined with any other embodiment disclosed herein, the fluid jet 190 can be a cutting fluid curtain.

During operation of a semiconductor wire saw 100, a fluid jet 190 can be generated, for example by restricting the flow of the cutting fluid by the outlet 112 of the nozzle 100. For example, the cutting fluid passes through the nozzle outlet 112. As the fluid passes through, the nozzle outlet 112 can provide a shear force to the fluid, and can cause a drop in pressure of the fluid. For example the inside of the nozzle outlet 112 can provide a wetting surface(s) of the nozzle, the fluid in the nozzle making contact with the wetting surface(s). The nozzle 100 can generate a fluid jet 190 which is able to be directed toward the wire web 170.

Fig. 2 illustrates a nozzle outlet 112, according to an embodiment described herein. The nozzle outlet 112, particularly the inner perimeter of the nozzle outlet 112, has for example a length, width, and depth, which coincide with the coordinate axes illustrated in Fig. 2: axes 201, 202, 203, respectively. The length can be at least equal to the width of the nozzle outlet 112, and may be considerably greater, as illustrated. The depth can be along or coinciding with the direction of flow of the cutting fluid within the nozzle outlet 112, the flow direction 260 of the outlet 112. In an embodiment which may be combined with other embodiments, the width and optionally the length of the nozzle outlet 112 is constant along the depth of the nozzle outlet 112. A nozzle outlet 112 which has a constant width along the depth may reduce the risk of discontinuities in the fluid jet 190.

The cutting fluid can pass through and exit the nozzle through the nozzle outlet 112, e.g. in the direction 203, along the depth direction such as parallel to the depth direction. The cutting fluid can form a fluid jet 190 by exiting the nozzle 100, particularly the nozzle outlet 112. As depicted in Fig. 2, an areal cross-section 250 of the outlet 112 can be perpendicular to the flow direction 260 of the outlet.

The flow direction 260 of the outlet can be uniformly distributed within the areal cross-section of the outlet (optionally excluding the points which coincide with surface portions disposed in the interior of the areal cross-section). Furthermore, the flow direction can be uniformly distributed within a volume such as the entire volume of the outlet (optionally excluding the points which coincide with surface portions disposed in the interior of the areal cross-section). Furthermore optionally, the flow direction of the outlet 112 is perpendicular to the areal cross-section 250 of the outlet 112. Furthermore optionally, the flow direction 260 of the outlet 112 is configured to be at least substantially, such as entirely, parallel to a flow direction of the fluid jet.

The width 202 of the nozzle, particularly the outlet thereof, may be from 1 to 5 mm, or from 1 mm to 2 mm; the length 201 may be from 350 mm to 700 mm.

According to an embodiment, the ratio of the depth to the width (ratio of depth/width) of the inner perimeter of the outlet 112 is greater than 3.5. A high ratio of depth/width (greater than 3.5, 4, or 5) is desirable for increasing the pressure loss of the fluid as it traverses through the nozzle, particularly the nozzle outlet, for example by the shear stress applied to the cutting fluid by the inner walls of the nozzle outlet as it traverses the nozzle outlet 112. It can be even more desirable to apply greater shear stress by increasing the ratio depth/width to 4 or higher, or even 5 or higher, which may desirably increase the pressure loss of the cutting fluid traversing the nozzle, e.g. by an increase of the applied shear stress to the cutting fluid. Higher values of the ratio depth/width such as 4 or higher, or 5 or higher, can allow a higher clearance opening, or width 202. A higher clearance opening may have a reduced risk of clogging.

In an embodiment, the wire saw, particularly the nozzle thereof, is provided without a chicane such as a plurality of holes or passages which connect an internal chamber of a two chamber nozzle to an outer chamber of the nozzle. The inventors have found that a two chamber nozzle and/or a nozzle with a chicane is not required when components as described herein are used for applying a shear stress and/or inducing a pressure loss to the cutting fluid. Thus, in embodiments without a chicane, it is possible to reduce the size of the nozzle and/or the risk of clogging of the nozzle. In some embodiments, chicanes may increase the risk of clogging by hindering the flow of particulate matter in the cutting fluid. Embodiments described herein can provide a uniform distribution of the cutting fluid across the fluid jet 190, such as a fluid curtain.

Fig. 3 illustrates a nozzle outlet 112 according to an embodiment described herein, in which the nozzle outlet 112 includes two plates 220, 230 separated by a width 202 which can correspond to the width of the fluid jet 190 as it exits the nozzle outlet 112, and/or or a clearance, slit width, or gap distance. The nozzle outlet may be provided as two separate plates or the plates may be connected across the width, for example with peripheral wall members located across the width direction. The plates 220, 230 can have a length 201 and depth 203. As above, a ratio depth/width greater than 3.5, greater than 4, and/or greater than 5 may be implemented. It is contemplated that the embodiment depicted in Fig. 3 may have the advantage of being easily cleaned, for example automatically cleaned. A ratio of depth to width greater than 3.5, 4 or 5 may be advantageous in providing for a high shear stress to the cutting fluid.

The nozzle outlet 112 may be additionally or alternatively provided with surface portions, for example structures which present a wet surface to a flowing cutting fluid. Structures (surface portions) may be disposed within the inner region of the nozzle such as in an inner region of the areal cross-section of the outlet. The structures (surface portions) may provide shear stress and/or induce a pressure loss in the cutting fluid. Embodiments described herein may generate a uniform and/or stable fluid jet. Embodiments described herein, particularly below, may allow for producing a compact nozzle, which may for example provide a large (total) wet surface along a small depth of the outlet.

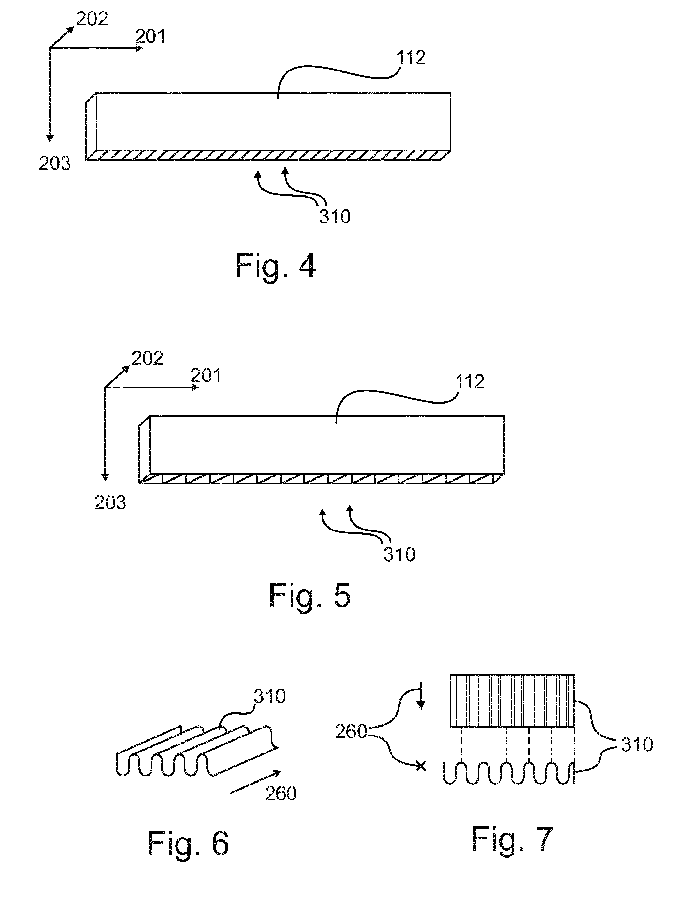

Fig. 4 illustrates a nozzle outlet 112 including a plurality of surface portions 310 for providing a shear stress in the fluid, according to an embodiment described herein. The surface portions 310 are optionally such that the surface portions 310 are disposed in an inner region of the areal cross-section of the outlet 112.

Furthermore, each of the surface portions 310 may extend along the flow direction 260 of the outlet 112, e.g. along the depth direction 203; which can result in a particularly advantageous application of shear stress on the cutting fluid as it traverses the outlet 112. For example, the surface portions extended along the flow direction can apply shear stress without increasing the risk of turbulent flow which may lead to clogging and/or a non-uniform fluid jet.

Moreover, the surface portions 310 may include or be entirely composed of surfaces oriented along the flow direction of the outlet 112, for example planar surfaces. It is possible, therefore, that turbulent effects are reduced, particularly when the surface portions are oriented along the flow direction; furthermore such an orientation may reduce the risk or severity of clogging of the outlet 112 and may provide an effective shear stress for forming a uniform fluid jet.

Alternatively or additionally, the surface portions 310 may be provided such that a flow direction of a cutting fluid along a greatest areal portion of the surface portions 310 is parallel to the flow direction 260 of the outlet 112.

The surface portions 310 of an outlet 112 can include a plurality of fins which may be parallel to each other, e.g. the fins are arranged in parallel cross-section. The fins may be planar. The fins may be spaced apart, on average, from 1 mm to 20 mm, or from 2 mm to 8 mm; in other words an average spacing between fins may range from 1 mm to 20 mm, or from 2 mm to 8 mm. For example, the fins are evenly spaced. Alternatively or additionally, the fins may lie between main walls of the outlet 112 and be orthogonal to the main walls.

Fig. 5 illustrates a nozzle outlet 112 with a triangular cross-section of surface portions 310, according to an embodiment described herein. For example the surface portions are fins, arranged in triangular cross-section.

Figs. 6 and 7 illustrate surface portions 310 of an outlet 112 with respect to a flow direction 260 of the outlet, according to an embodiment described herein. The surface portions 310, e.g. fins, may have a wave and/or sinusoidal cross-section. Fig. 6 is a view of the surface portions 310. Fig. 7 shows cross-sectional views in the plane formed by coordinate axes 201 and 203 (above) and coordinate axes 201 and 203 (below). The cutting fluid can flow along the flow direction 260 of the outlet 112 along and/or between the surface portions 310.

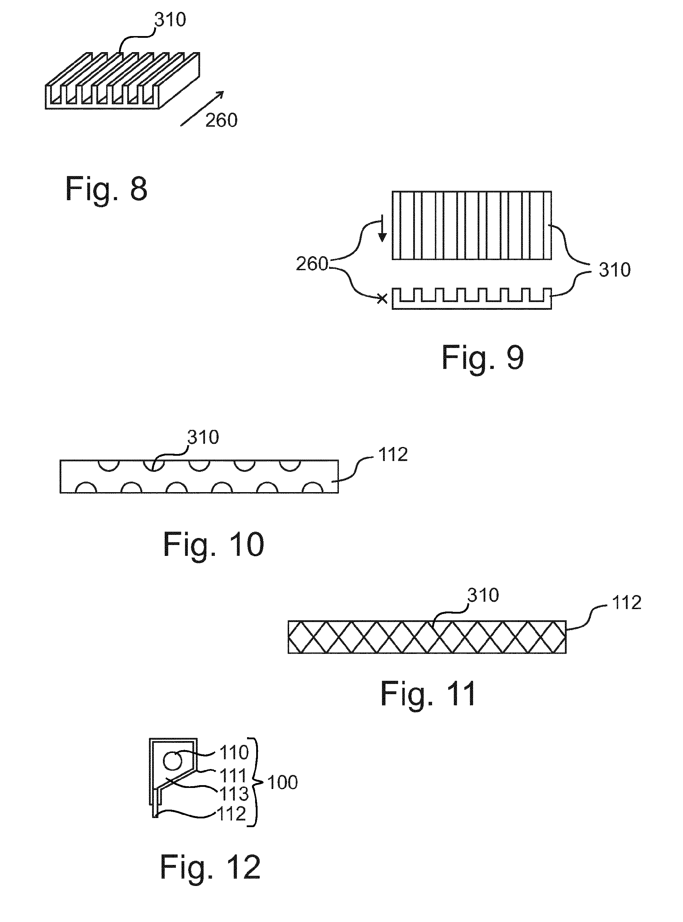

Figs. 8 and 9 illustrate surface portions 310 with respect to a flow direction 260 of the outlet 112, according to an embodiment described herein. The surface portions may be fins attached at an end to a plate. Fig. 8 is a view of the surface portions 310. Fig. 9 shows cross-sectional views in the plane formed by coordinate axes 201 and 203 (above) and coordinate axes 201 and 203 (below). The cutting fluid can flow along the flow direction 260 of the outlet 112 along and/or between the surface portions 310.

Fig. 10 illustrates, in cross-section, surface portions 310 of an outlet 112, according to an embodiment described herein. The flow direction 260 of the outlet can be perpendicular to the shown cross section of the outlet 112. Surface portions may be rounded.

Fig. 11 illustrates, in cross-section, surface portions 310 of an outlet 112, according to an embodiment described herein. The flow direction 260 of the outlet can be perpendicular to the shown cross section of the outlet 112. Surface portions 310 may form a crosshatched cross-section.

In an embodiment which may be combined with any other embodiment, surface portions 310 may form a repeating shape in cross-section.

In an embodiment, the surface portions include only fins oriented along the flow direction of the outlet, and are the only components, if any, located within the inner region of the areal cross-section of the outlet 112. Alternatively or additionally, each surface portion 310 such as a fin may extend along the flow direction of the outlet 112. An advantage is that the risk of clogging by particulate matter may be reduced, and/or the risk of a nonuniform fluid jet is reduced.

The outlet 112, e.g. an outlet 112 including surface portions 310, as described herein may be a replaceable component of the nozzle. This is advantageous because nozzles occasionally require replacement due to, for example, becoming clogged.

It is particularly contemplated that the outlet 112 the outlet 112 can be formed of polypropylene, which may be advantageous because it can be precisely extruded. For example, the outlet 112 can be mainly or entirely polypropylene. Alternatively or additionally, the outlet 112 can include an extrusion, for example the outlet 112 is mainly or entirely an extrusion, e.g. a "semi" or "semi-extrusion," which can be advantageously economical to produce, and may additionally/alternatively be precisely produced. Alternatively or additionally, the outlet may include sheet metal, particularly a parallel plate configuration may be amenable to construction with sheet metal.

The manufacturing precision of a channel between the chambers, particularly of dual chamber nozzles, as well the manufacturing precision of the nozzle outlet slit, may increase nozzle costs, particularly if uniform slurry fluid jets are to be generated. The nozzle outlet can be precisely machined and/or may require careful handling. Small impacts on the nozzle occurring during maintenance operations may reduce the flow uniformity. In an embodiment, the nozzle outlet is formed of an extrusion, which may reduce cost by being inexpensive to manufacture and amenable to replacement.

Fig. 12 illustrates a nozzle 100, according to an embodiment described herein. The nozzle 100 may include a nozzle frame 111 and/or a nozzle inlet 110 for receiving the cutting fluid into the nozzle, such as a nozzle main chamber 113. For example, the inlet 110 may have a diameter of 20 mm.

In an embodiment, the main chamber 113 of the nozzle 100 lacks a chicane. In an embodiment, the nozzle 100 lacks a chicane, and optionally has fins which may provide a wetting surface for providing shear stress to the cutting fluid. In an embodiment, the nozzle 100 includes fins and a chicane, such as fins in the outlet and a chicane in the main chamber 113. An advantage of the chicane is that it can provide an additional way to induce a reduction of pressure of the fluid from the inlet side of the nozzle to the outlet.

In an embodiment, the outlet lacks fins. It is noted that in this case, the relation between width 202 and depth 203 is cubic, for example if the width 202 is doubled (width/width₀)=2 , the depth 203 can be 8 times larger (depth = 8×depth₀) in order to have the same pressure losses of the fluid: depth = depth₀×(width/width₀)³. However, it is noted that it is possible to reach the same level of shear stress (pressure losses) by adding features such as wetting surfaces such as surface portions such as fins without increasing the ratio of the depth to the width. Put another way, pressure losses can also be induced by wetting surfaces (e.g. surface portions, fins, etc.) that may be internally disposed in the nozzle, particularly the outlet. Internally disposed can mean disposed in an inner region of the areal cross-section of the outlet.

In an embodiment, the outlet 112 has a ratio of depth to width of more than 3.5, 4, or 5; and/or the outlet 112 has surface portions 310, particularly surface portions 310 disposed in an inner region of the areal cross-section 250 of the outlet 112. The minimum ratio, the surface portions as described, or a combination thereof, can provide adequate shear stress for generating a uniform fluid jet, and may reduce the risk of clogging, and/or may save space by for example allowing a nozzle lacking a chicane. The space saved may particularly be in the depth direction 203.

In an embodiment, the outlet has from 100 to 800 fins, or from 200 to 600 fins, or from 300 to 500 fins. More fins may allow a smaller ratio of depth to width by providing additional wet surfaces, which makes a more compact, e.g. space-saving, nozzle.

In an embodiment, the outlet 112 may be fixed to a frame of the nozzle 100 by pinching, clipping, bolting, or the like. The outlet may be replaceable. It is noted that sealing may be required as approximately 0.2 bar overpressure of the cutting fluid may be experienced. For example sealing components such as O-rings can be employed, for example between the frame 111 and the outlet 112.

In an embodiment, the nozzle 113 is a single chamber nozzle. It is contemplated that the nozzle outlet 112 may significantly reduce the pressure of the cutting fluid by for example applying shear stress to the cutting fluid. It is particularly noted that embodiments herein may be amenable for use with a single chamber nozzle which can advantageously simplify the construction of the nozzle 100 in comparison to, for example, a dual chamber nozzle. For example, a nozzle 100 is provided with an inlet 110 which leads directly to a main chamber 113 which in turn can lead directly to the outlet 112. For example, a single chamber nozzle without a chicane can significantly reduce the pressure of the cutting fluid.

At the nozzle outlet, the flow velocity such as the vertical velocity of the cutting fluid can be small. For example, where the cutting fluid meets the wire web, a low flow velocity will not greatly deform or strain the wire web. A small fluid velocity can reduce perturbations on the wire web. For example, pressure losses at the nozzle outlet, e.g. a slit, may be low. For uniform distribution of the flow at the outlet of the nozzle, pressure perturbations due to for example a velocity gradient, recirculation zones, gravity, and spatial non-uniformity of the cutting fluid (e.g. a non-uniform thickness) can be smaller compared to the other parts of the nozzle. This can lead to and/or enable a large inlet cross section. It is possible that, at reduced flow rates, other effects like gravity and slurry nonuniformities may perturb the flow uniformity.

In an embodiment, the flow direction of the fluid jet may coincide with the flow direction of the nozzle (e.g. the flow direction of the fluid within the outlet 112 of the nozzle 100).

In an embodiment, the fluid jet generated by the nozzle 100 is a cutting fluid curtain which may have a long dimension coinciding with the length of the nozzle and a short dimension coinciding with a width of the nozzle.

While the foregoing is directed to embodiments of the invention, other and further embodiments of the invention may be devised without departing from the basic scope thereof, and the scope thereof is determined by the claims that follow.

## Claims

1. A semiconductor wire saw (1) comprising:
a support (150) for holding a semiconductor workpiece;
a wire guide (160) for forming a wire web (170) for sawing the workpiece;
a nozzle (100) for generating a fluid jet (190) directable at the wire web (170); wherein
the nozzle (100) includes an outlet (112), the outlet (112) having a width (202) and a depth (203); wherein
the width (202) and a length (201) of the outlet (112) coincide with an areal cross-section (250) of the outlet (112); wherein
(a) the ratio of the depth to the width is greater than 3.5 and/or
(b) the outlet (112) further comprises a plurality of surface portions (310) for providing a shear stress in a cutting fluid, wherein the surface portions (310) are disposed in an inner region of the areal cross-section (250) of the outlet (112).

2. The semiconductor wire saw of any preceding claim, wherein each surface portion (310) extends along a flow direction (260) of the outlet (112).

3. The semiconductor wire saw according to any preceding claim, wherein the surface portions (310) include a surface extending along a flow direction (260) of the outlet (112), such as a planar surface.

4. The semiconductor wire saw (1) according to any preceding claim, wherein the surface portions (310) are configured such that a flow direction along a greatest areal portion of the surface portions (310) is parallel to a flow direction (260) of the outlet (112).

5. The semiconductor wire saw (1) of any preceding claim, wherein a flow direction (260) of the outlet is an average flow direction of the cutting fluid in the outlet; wherein optionally the flow direction (260) of the outlet is uniformly distributed within the outlet; wherein furthermore optionally the areal cross-section (250) of the outlet (112) is perpendicular to the flow direction of the outlet (112).

6. The semiconductor wire saw according to any preceding claim, wherein the surface portions (310) comprise a plurality of fins; wherein optionally the fins have an average spacing of from 1 mm to 20 mm or from 2 mm to 8 mm, such as being evenly spaced; wherein optionally the fins are parallel to each other; wherein optionally the fins are planar.

7. The semiconductor wire saw (1) according to claim 6; wherein the fins are arranged in wave, parallel, sinusoidal, and/or triangular cross-section.

8. The semiconductor wire saw (1) according to any preceding claim, wherein the nozzle (100) further comprises
a nozzle inlet (110) for receiving the cutting fluid into a nozzle main chamber (113); wherein the nozzle main chamber (113) optionally leads directly to the outlet (112).

9. A semiconductor wire saw (1) according to any preceding claim, wherein the nozzle (100) is a single chamber nozzle for leading the cutting fluid to the outlet (112), such as directly to the outlet (112).

10. A semiconductor wire saw (1) according to any preceding claim, wherein a main chamber (113) of the nozzle (100) lacks a chicane; wherein furthermore optionally the nozzle (100) lacks a chicane.

11. The semiconductor wire saw (1) according to any preceding claim, wherein the nozzle (100) is adapted to generate a cutting fluid curtain.

12. The semiconductor wire saw (1) according to any preceding claim, wherein the outlet (112) comprises an extrusion, particularly the outlet (112) is mainly or entirely the extrusion; wherein optionally the extrusion comprises polypropylene such as entirely polypropylene.

13. The semiconductor wire saw (1) according to any preceding claim, wherein the outlet (112) is a replaceable component of the nozzle (100).

14. The semiconductor wire saw (1) of any preceding claim, wherein the ratio of the depth to the width is greater than 4 or 5.

15. A method of generating a fluid jet in a semiconductor wire saw (1) according to any preceding claim, the method comprising:
restricting a flow of the cutting fluid by the outlet of the nozzle.
